(19)

Europäisches
Patentamt
European
Patent Office
Office européen
des brevets

(11)  **EP 3 745 313 A1**

(12)  **EUROPEAN PATENT APPLICATION**

(43)  Date of publication:
02.12.2020 Bulletin 2020/49

(51) Int Cl.:
**G06N 3/04** *(2006.01)*  **G06N 3/08** *(2006.01)*
**G06N 20/00** *(2019.01)*

(21)  Application number: **20161292.6**

(22)  Date of filing: **05.03.2020**

(84)  Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30)  Priority: **31.05.2019  US 201916428016**

(71)  Applicant: **Hitachi, Ltd.**
**Tokyo 100-8280 (JP)**

(72)  Inventors:
• **WANG, Qiyao**
**Santa Clara, California, 94054 (US)**

• **ZHENG, Shuai**
**Santa Clara, California, 94054 (US)**
• **FARAHAT, Ahmed**
**Santa Clara, California, 94054 (US)**
• **SERITA, Susumu**
**Santa Clara, California, 94054 (US)**
• **SAEKI, Takashi**
**Santa Clara, California, 94054 (US)**
• **GUPTA, Chetan**
**Santa Clara, California, 94054 (US)**

(74)  Representative: **Mewburn Ellis LLP**
**Aurora Building**
**Counterslip**
**Bristol BS1 6BX (GB)**

(54)  **A PREDICTIVE MAINTENANCE SYSTEM FOR EQUIPMENT WITH SPARSE SENSOR
MEASUREMENTS**

(57)  Example implementations described herein are directed to constructing prediction models and conducting predictive maintenance for systems that provide sparse sensor data. Even if only sparse measurements of sensor data are available, example implementations utilize the inference of statistics with functional deep networks to model prediction for the systems, which provides better accuracy and failure prediction even if only sparse measurements are available.

FIG. 1

**Description**

**BACKGROUND**

Field

The present disclosure is generally related to predictive maintenance systems, and more specifically for predictive maintenance systems involving sensors providing sparse measurements.

Related Art

Predictive maintenance systems are concerned with the application of machine learning and artificial intelligence techniques to the data generated by the equipment in order to recommend the right maintenance action at the right time. Such systems can provide a variety of tasks such as monitoring the equipment and the detection of health or performance degradation, the prediction of whether an equipment will failure within a given time horizon (also known as failure prediction), the estimation of how much time is left in the useful life of the equipment (also known as remaining useful life estimation), and the recommendation of corrective repair actions given any of the previous situations (also known as repair recommendation). For all these tasks, it is often assumed that the equipment is instrumented with a variety of sensors at different locations and that these sensors continuously generate regular measurements which are fully transmitted and stored for later retrieval and processing.

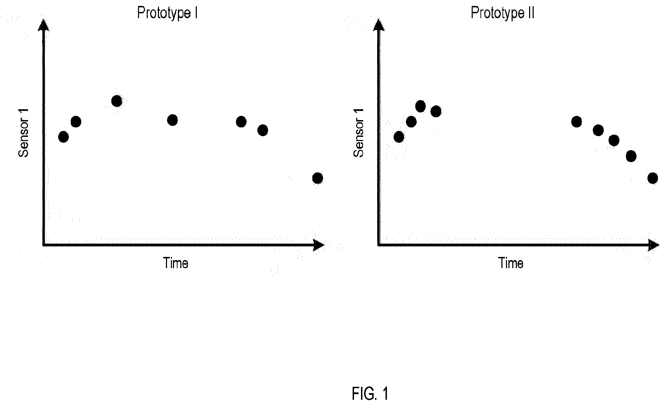

However, in practice, the aforementioned assumption is frequently violated. For a given equipment, there may be access to partial sensor measurements which are often sampled at irregular intervals. There are two practical scenarios in which partial information are obtained, as illustrated in FIG. 1. In the first scenario as illustrated on the left, the sensor measurements are recorded at a limited number of times and the observing times are distributed relatively uniformly across the entire range; in the second scenario as illustrated on the right, the sensor readings clustered within certain sub-regions in the time space with no information available at other regions of the temporal space. These two scenarios are referred to as sparse sensor data.

There are several environments that can involve sparse sensor data in the industrial setting. For example, Industrial Internet of Things (IoT) systems often collect a random sample of sensor data for small periods of time to reduce data storage and communication costs. In another example, sometimes there are missing sensor measurements, due to either the malfunction of sensors or data transfer errors. In another example, sometimes sensor measurements are collected in certain situations. For instance, the sensor measurement is collected only when equipment encounters some faults and are brought to the repair shop. In another example, mobile measuring devices (e.g., handheld vibration meters) are used to obtain measurements at different times or from multiple locations of the equipment. For instance, oil samples are infrequently collected and sent to labs for wear particle analysis. Vibrations are measured by handheld vibration meters at selected locations of the equipment.

When such sparsity exists in industrial sensor data, the data cannot be fed directly into related art machine learning and statistical algorithms to conduct the predictive maintenance tasks. This is because related art methods typically require that for each individual device, there is access to densely and regularly observed sensor data within the temporal space considered.

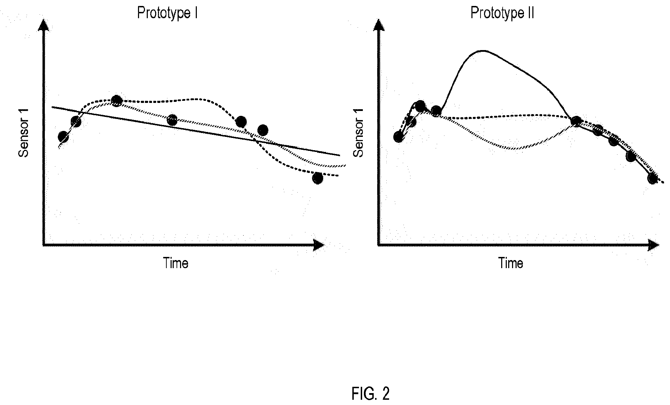

One related art implementation is to conduct a data pre-processing step which first recovers the entire curve and then evaluates the recovered curve at a dense and regular grid of points. The dense and regular sensor data are then fed into the predictive maintenance algorithm. However, the recovered curve is not guaranteed to overlap well with the real evolution curve due to the sparsity in the sensor data. FIG. 2 illustrates an example problem of curve fitting for sparse sensor data. In FIG. 2, it is not possible to determine which of the three curves in the examples is the best approximate of the true curve. Consequently, the final observations and recommendations from this common practice might be inaccurate and might result in financial losses to industrial businesses.

In the related art, there are two categories of existing methods for handling sparse sensor data for predictive maintenance tasks. The first method ignores the fact that there are multiple observations for each of the sensors considered. Instead, such related art methods treat the observations from the same sensor as if they are independent, i.e., the observation from a sensor at time $T_1$ is not affected by its measurement at time $T_2$ ($T_1 < T_2$) or the observation from a sensor at location $L_1$ is not affected by its measurement at time $L_2$. Then, the related art methods utilize traditional classification and regression techniques in the machine learning and deep learning domains to solve Predictive Maintenance problems such as failure prediction and Remaining Useful Life (RUL) estimation. However, the implicit independence assumption is not appropriate, as typically, the equipment sensor readings at later stages highly depend on the earlier stages and the equipment sensor reading at different locations are highly correlated. Discarding the correlations among the observations of the same equipment might result in biased conclusions.

The second category of related art methods transforms the sparse data into a dense signal through a pre-processing step and then feeds the preprocessed data to models which can appropriately model dense sequential data, such as the Long-Short Team Memory network (LSTM), the Recurrent Neutral Network (RNN) and the functional multilayer perceptron (functional MLP). This strategy can model the correlation among observations from the same device. However, its accuracy cannot be guaranteed as the pre-processing step cannot consistently recover the true curve when there are a limited number of observations available in each device.

## SUMMARY

In example implementations, there is a novel data-driven solution for handling sparsity in sensor data for predictive maintenance tasks by capturing correlation among measurements using multiple sparse sequences from the same sensor type across several pieces of equipment.

Example implementations described herein involve a system and solution for appropriately modeling sparse sequential information over time which directly utilizes the raw sensor data generated by the equipment. Example implementations described herein can provide better results than the first type of related art methods, as sequential information, i.e., the correlation among sensor measurements of the same equipment, is taken into account. Unlike the second type of related art methods, example implementations described herein are built upon the raw data directly which eliminates the unnecessary biases introduced in the pre-processing step.

Example implementations described herein involve a novel transformation called sparse functional neuron that efficiently transfers the information contained in sparse sensor data to numerical features, which are then fed into one or more deep neural networks to perform predictive maintenance tasks. The proposed sparse functional neuron treats the sparse sensor data for each individual device as a sparse realization of the underlying continuous curve of the sensed signal. Given measurements from several equipment of the same type, the proposed sparse functional neuron pools sensor measurements from all equipment together to compute consistent estimates for components of an orthonormal functional space called eigen-space. Each of the continuous sensor curves can then be represented as a linear combination of the computed functional components in the eigen-space. The coefficients in the linear combination representation of a given sensor curve are estimated by their best linear unbiased predictors, i.e., the conditional expectations of the coefficients given the sparse sensor data of this device. After the previous steps, the sparse functional neuron computes the best predictors for each sensor curves based on the sparse sensor readings.

The next step in sparse functional neuron is to calculate the inner product of the computed continuous sensor function and a trainable weight function. The inner product outputs a numerical number which is fed into subsequent numerical neurons to perform predictive maintenance tasks. In summary, for a given time window, the proposed neuron takes sparse sensor data within this window as inputs and outputs numerical numbers which accurately represents the characteristics of the underlying continuous curve that generates these sparse data. Then this sparse functional neuron can be embedded in deep neural networks, including Multilayer Perceptron, Recurrent Neural Networks, and Long-Short Term Memory, to form systems that perform predictive maintenance tasks such as failure prediction or remaining useful life estimation.

## BRIEF DESCRIPTION OF DRAWINGS

FIG. 1 illustrates examples of sparse sensor data scenarios.

FIG. 2 illustrates an example problem in curve fitting sensor data in sparse sensor data scenarios.

FIG. 3 illustrates an example of a sparse functional multi-layer perceptron system, in accordance with an example implementation.

FIG. 4 illustrates an example of a sparse functional LSTM/RNN in accordance with an example implementation.

FIG. 5 illustrates an example flow diagram for facilitating the learning phase of the sparse functional MLP system, in accordance with an example implementation.

FIG. 6 illustrates an example flow diagram for facilitating the application phase, in accordance with an example implementation.

FIG. 7 illustrates a system involving a plurality of apparatuses and a maintenance planning apparatus, in accordance with an example implementation.

FIG. 8 illustrates an example computing environment with an example computer device suitable for use in some example implementations.

## DETAILED DESCRIPTION

The following detailed description provides further details of the figures and example implementations of the present application. Reference numerals and descriptions of redundant elements between figures are omitted for clarity. Terms used throughout the description are provided as examples and are not intended to be limiting. For example, the use of the term "automatic" may involve fully automatic or semi-automatic implementations involving user or administrator control over certain aspects of the implementation, depending on the desired implementation of one of ordinary skill in the art practicing implementations of the present application. Selection can be conducted by a user through a user interface or other input means, or can be implemented through a desired algorithm. Example implementations as described herein can be utilized either singularly or in combination and the functionality of the example implementations can be implemented through any means according to the desired implementations.

Example implementations described herein involve a novel model extracting numerical features from sparse sensor data, called a sparse functional neuron, and embed it in one or more deep neural networks to facilitate the sequential modeling based on sparse sensor data from each piece of equipment for predictive maintenance tasks.

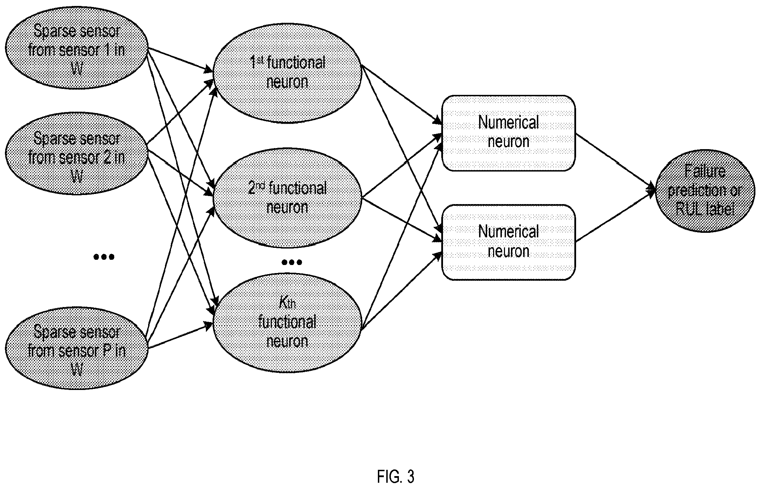

When the entire temporal range $W$ of the sparse signal is treated at the same time, example implementations utilize a sparse functional multi-layer perceptron (MLP) system by embedding the sparse functional neuron with the MLP. The architecture of sparse functional MLP system with K functional neurons in the first layer and two numerical neurons in the second layer is illustrated in FIG. 3. Note that the functional neurons can be followed by multiple layers of numerical neurons.

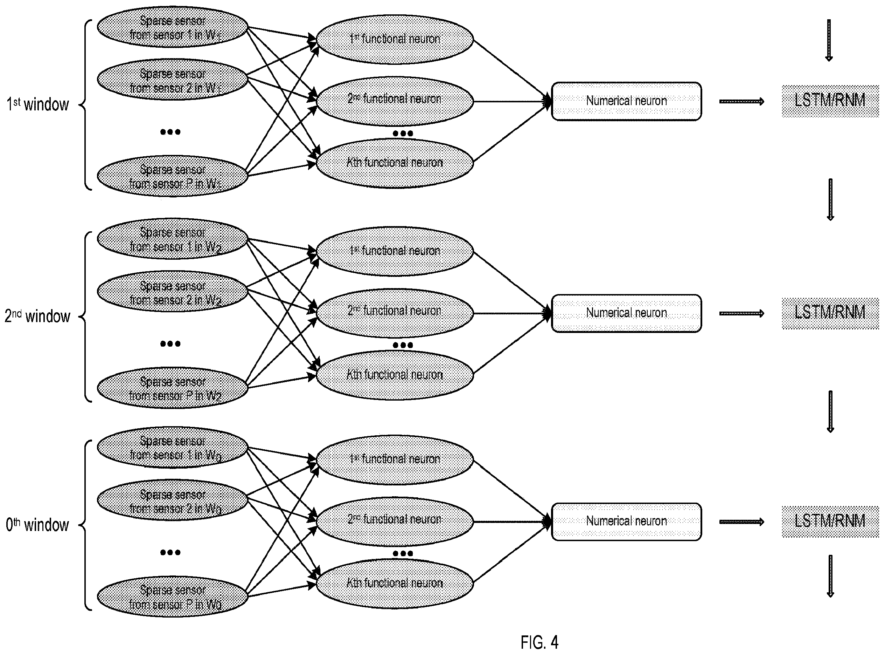

In example implementations, the entire range W can be divided into a sequence of non-overlapping windows $W_1, ..., W_0$. Within each window, example implementations construct sparse functional MLP networks to extract the curvature information within the corresponding local window. Then, the extracted sequence of numerical variables is fed into sequential models such as Long-Short Term Memory (LSTM) networks or Recurrent Neural Networks (RNN). FIG. 4 illustrates an example of a sparse functional LSTM/RNN in accordance with an example implementation.

In example implementations described herein, a sparse functional MLP system is described.

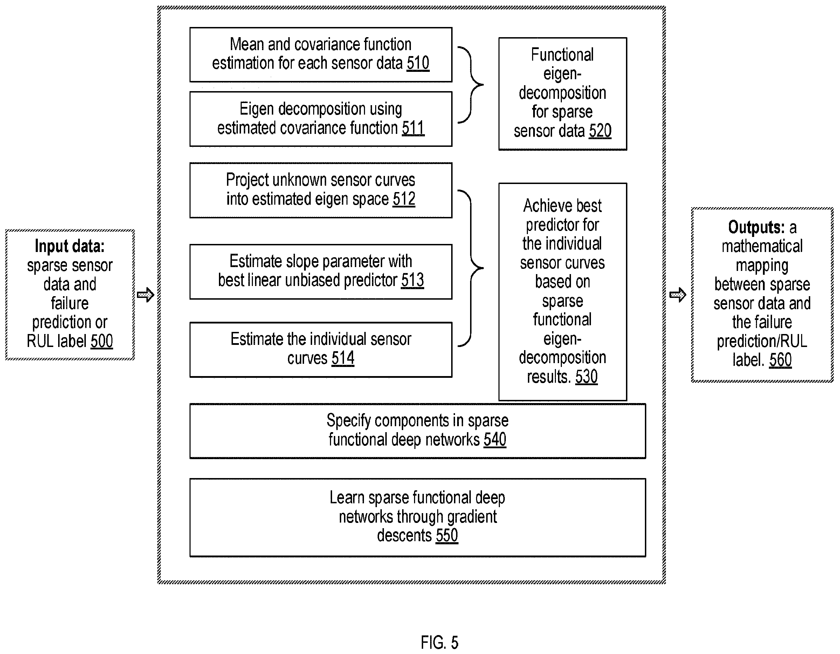

FIG. 5 illustrates an example flow diagram for facilitating the learning phase of the sparse functional MLP system, in accordance with an example implementation. Initially, data is input 500 that can include the sparse sensor data, and the failure predictions or RUL labels. The learning phase can involve the following processes.

Functional eigen-decomposition for sparse sensor data 520 involves two processes; the mean and covariance function estimation 510 and the eigen decomposition using estimated covariance function 511. In the mean and covariance estimation 510, for each sensor, the system pools the sparse sensor data from different equipment together and uses the pooled data to estimate the mean sensor curve and the covariance function. The mean sensor curve is the unknown curve that characterizes the average evolution of the sensor variable within the window considered. The covariance function is a two-dimensional function which quantifies the magnitude of linear relationship between the sensor values at any two points within the time window.

In the eigen decomposition using the estimated covariance function 511, the system conducts, for each sensor, eigen-decomposition of the estimated covariance function to achieve estimated orthonormal eigenfunctions, and estimated eigenvalues. For the estimated orthonormal eigenfunctions, each of the eigenfunctions is a unit function which has length 1 in the curve space. The eigenfunctions are orthogonal to each other, i.e., they capture non-overlapping variation mode in the sensor curve. For the estimated eigenvalues, each eigenfunction corresponds to an eigenvalue which quantifies the variation in sensor.

The process for achieving the best predictor for the individual sensor curves based on sparse functional eigen-decomposition results 530 involves projecting the unknown sensor curves into the estimated eigen space 512, estimating the slope parameter with the best linear unbiased predictor 513, and estimating the individual sensor curves 514. In the process for projecting the unknown sensor curves into estimated eigen space 512, the system represents, for each sensor, the unknown sense curves for each device as a linear combination of the orthonormal eigenfunctions of the covariance function, with the unknown equipment-dependent slope parameters quantifying how similar each sensor curves are to the common eigenfunction curves.

In the process for estimating the slope parameter with best linear unbiased predictor 513, these parameters cannot be estimated directly due to the sparse realizations of the sensor curve for each individual device. Thus, example implementations use the best linear unbiased predictor, which serves as the best guess for the equipment-dependent parameter given the sparsity of the data.

In the process for estimating the individual sensor curves 514, the system plugs the best predictor of the equipment-dependent slope parameters back to the linear representation of the individual continuous sensor curve in the eigen-space, which accordingly produces a best predictor for all the individual sensor curves.

The process to specify components in sparse functional deep networks 540 can involve, for each sensor, defining a weight function (with unknown parameters) which quantifies how the sensor curve at any location within the window relates to the failure prediction or RUL label. Then the contribution of the given sensor curve is defined as the integral of the weight function times the predicted sensor curve over the entire window. A functional neuron is defined as the summation of this integration between weight function and sensor curve.

The process to learn sparse functional deep networks through gradient descents 540 involves iterative steps of learning the unknown weight function and numerical weight parameters in functional and regular numerical neurons. The steps involve forward propagation and backward propagation.

In forward propagation, for any given parameters and weight functions, the system calculates the functional neurons which take the predicted sensor curves as input and outputs a numerical number, then supplies the numerical numbers to subsequent numerical layers. The system then compares the final output of the deep network with the true failure prediction/ RUL label to see whether a certain stopping criterion is met. If so, then the system stops and outputs the current parameters and weight functions as the learned optimal solution. If not, then the system proceeds to conduct backward propagation to search for better parameters.

In backward propagation, the system calculates the partial derivatives of the loss function, which quantifies the difference between the output of our deep network and the true label, with respect to the unknown parameters. Then, the system uses these partial derivations to update the parameter values used in the previous step, and proceeds to conduct forward propagation with the updated parameters and weight functions.

The resultant output at 560 is a mathematical mapping between sparse sensor data and the failure prediction/RUL labels from the input 500.

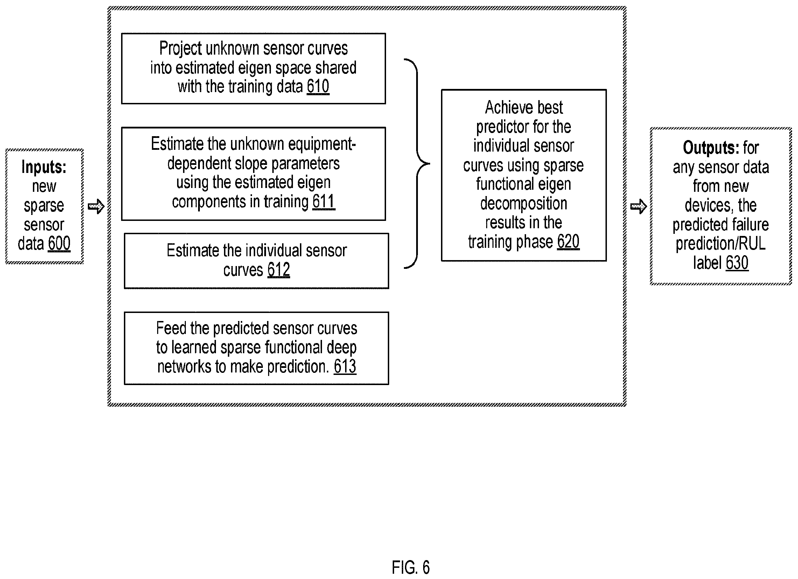

FIG. 6 illustrates an example flow diagram for facilitating the application phase, in accordance with an example implementation. The application phase can involve the following processes. At 600, the system takes in sparse sensor data as input.

At 620, the system achieves the best predictor for the individual sensor curves using sparse functional eigen decomposition results in the training phase. The system implements the determination of the best predictor through the following processes.

At 610, the system projects unknown sensor curves into the estimated eigen space. That is, for each sensor, the system represents the unknown sense curves for each device as a linear combination of the orthonormal eigenfunctions estimated in the training phase, with the unknown equipment-dependent slope parameters quantifying how similar each sensor curves are to the previously-used eigenfunction curves.

At 611, the system estimates the unknown equipment-dependent slope parameters using the estimated eigen components in training. Such parameters cannot be estimated directly due to the sparse realizations of the sensor curve for each individual device. Example implementations address this problem by utilizing the best linear unbiased predictor, the calculation for which re-use the eigen components estimated.

At 612, the system estimates the individual sensor curves. By plugging the best predictor of the equipment-dependent slope parameters back to the linear representation of the individual continuous sensor curve in the eigen-space, the system can accordingly obtain a best predictor for all the individual sensor curves.

At 613, the system feeds the predicted sensor curves to the learned sparse functional deep networks to make a prediction. That is, the system feeds the predicted sensor curve to the deep network learned in the training phase to calculate the predicted failure prediction /RUL label.

Related art MLP implementations whose modeling units are numerical random variables consist of conventional numerical neurons and can be trained directly using gradient descent methods. In the application phase, the related art MLP system directly supplies the new data into the trained MLP framework to make prediction for the predictive maintenance tasks. In contrast, the proposed sparse functional MLP is fundamentally different from the related art MLP systems as the modeling targets are the continuous underlying sensor curves over time. From the implementation perspective, as shown by the flowcharts above, there are additional processes utilized to reconstruct the continuous sensor reading curves in both the learning and application phases.

At 630, the output of the system can thereby be, for any sensor data from new devices, the predicted failure prediction/RUL label.

Mathematical details about sparse functional MLP

To simplify the description, the following mathematical notations are utilized. In total, there are n equipment observed within a pre-specified time range $[0, T]$. For the $i$-th equipment, it is assumed P sensors are measured at $N_i$ time points $[T_{i,1},...,T_{i,j},\ T_{i,N_i}]$. The $p$-th sensor readings of the $i$-th equipment is denoted as $\mathbf{Z}_{p,i} = [Z_{p,i,1},....,Z_{p,i,N_i}]$, for $p = 1,...,P$. The failure prediction label or the RUL label for the $i$-th equipment is $Y_i$.

Usually, the devices work continuously, so the sparse sensor readings can be viewed as finite realizations of the underlying continuous curve over time. The underlying curve of the $i$-th equipment are denoted as $X_{1,i}(t),...,X_{P,i}(t)$.

The relationship between $X_{p,i}(t)$ and $Z_{p,i,j}$ is

$$Z_{p,i,j} = X_{p,i}(T_{i,j}) + \varepsilon_{p,i,j}.$$

where $\varepsilon_{p,i,j} \sim N(0, \sigma_p)$ represent random errors that comes from the transferring and storing of the data in the IoT systems.

Example implementations assume that all the devices are of the same type, i.e., within time range $[0,T]$, $X_{p,i}(t)$ for $i = 1,....,n$, are independent random processes with an overall unknown mean sensor curve $\mu_p(t)$ and unknown covariance curve $G_p(t,t')$. And the sth largest eigenvalue of $G_p(t,t')$ is $\omega_{p,s}$ with corresponding eigenfunction $\varphi_{p,s}(t)$.

Using these notations and assumptions, the sparse functional MLP proceeds as follows:

1. Conduct functional eigen-decomposition for each of the $P$ features using the sparse sensor data. For the $p$th feature, use the $n$ sparse sensor data $Z_{p,i}$, for $i = 1,...,n$ to achieve estimates for eigenfunctions and eigenvalues, which are denoted as $\widehat{\omega_{p,s}}$, and $\hat{\varphi}_{p,s}(t)$, as well as the estimates for mean function $\mu_p(t)$ and random error $\sigma_p$. Any method in the related art according to the desired implementation can be utilized to conduct this sparse functional eigen-decomposition step.

2. Define and conduct forward propagation for the sparse functional MLP. The first trial for the definition of a sparse functional neuron is

$$D\big(X_{1,i}(t), \dots, X_{p,i}(t), \boldsymbol{\beta}\big) = \sum_{k=1}^{K} a_k U_k \Big(b_k + \sum_{p=1}^{P} \int_0^T V_{k,p}(\boldsymbol{\beta_{k,p}}, t) X_{p,i}(t) dt\Big)$$

where $V_{k,p}(\beta_{k,p},t)$ is a continuous functional characterized by a $Q_{k,p}$ dimensional vector $\boldsymbol{\beta_{k,p}} = (\beta_{k,p,1},...,\beta_{k,p,q},...,\beta_{k,p,Qk,p})^T$, $U_k$ is a $\mathbb{R}$ to $\mathbb{R}$ numerical activation function in the kth functional neuron, and $a_k$ and $b_k$ are numerical parameters in the kth functional neuron. However, this definition is not feasible as $X_{p,i}(t)$ is not attainable and it cannot be consistently recovered when there are only sparse data available on this curve $X_{p,i}(t)$.

As a result, $\int_0^T V_{k,p}(\boldsymbol{\beta_{k,p}}, t) X_{p,i}(t) dt$ cannot be calculated based on numerical integration techniques.

To address the above issue, example implementations utilize the following definition for sparse functional neuron:

$$H\big(X_{1,i}(t), \dots, X_{p,i}(t), \boldsymbol{\beta}\big)$$

$$= \sum_{k=1}^{K} a_k U_k \big(b_k$$

$$+ \sum_{p=1}^{P} \int_0^T V_{k,p}(\boldsymbol{\beta_{k,p}}, t) \sum_{s=1}^{S_p} \hat{E}[\int_0^T X_{p,i}(t) \varphi_{p,s}(t) dt \mid \boldsymbol{Z_{p,i}}] \hat{\varphi}_{p,s}(t) dt)$$

where $\beta$ a vector formed by connecting all the $\beta_{k,p}$ across $k$ and $p$.

This is motivated by the following:

a. Based on the orthonormality in the eigenfunctions $\varphi_{p,s}(t)$, there is:

$$X_{p,i}(t) = \sum_{s=1}^{\infty} \Big(\int_0^T X_{p,i}(t) \varphi_{p,s}(t) dt\Big) \varphi_{p,s}(t) \approx \sum_{s=1}^{S_p} \Big(\int_0^T X_{p,i}(t) \varphi_{p,s}(t) dt\Big) \varphi_{p,s}(t)$$

b. Even though $\int_0^T X_{p,i}(t)\varphi_{p,s}(t)dt$ is not computable, it can be replaced with its best linear unbiased estimator, i.e., $E[\int_0^T X_{p,i}(t)\varphi_{p,s}(t)dt \,|\, Z_{p,i}].$ The explicit formula is

$$E\left[\int_0^T X_{p,i}(t)\varphi_{p,s}(t)dt \,\middle|\, Z_{p,i}\right]$$

$$= \int_0^T \mu_p(t)\varphi_{p,s}(t)dt + \omega_{p,s}\varphi_{p,i,s}^T\left[\delta_{p,s}\mathrm{diag}(\omega_p)\delta_{p,s}^T + \sigma_p^2 I_{N_i\times N_i}\right]^{-1}(Z_{p,i} - \mu_{p,i})$$

where $\mu_{p,i}$ is a $N_i$ dimensional vector containing function $\mu_p(t)$ evaluated at $[T_{i,1},...,T_{j,N_i},T_{i,N_i}]$, $\varphi_{p,i,s}$ is the eigen-function $\varphi_{p,s}(t)$'s evaluation at those $N_i$ points, $\omega_p$ contains the first $S_p$ eigenvalues, and $\delta_{p,s}$ is a $N_i \times S_p$ matrix whose sth column is $\varphi_{p,i,s}$.

c. $E[\int_0^T X_{p,i}(t)\varphi_{p,s}(t)dt \,|\, Z_{p,i}]$ can be consistently estimated through plugging in the estimated $\widehat{\omega_s}$, and $\hat{\varphi}_s(t)$ in step 1 into the explicit formula. The estimation is denoted as $\hat{E}[\int_0^T X_{p,i}(t)\varphi_{p,s}(t)dt \,|\, Z_{p,i}].$

Based on this definition, in the forward propagation step, for any parameter set $(a_k, b_k)$ and $\beta$ and pre-specified weight functions $V_{k,p}(\beta_{k,p}, t)$, example implementations can calculate the values $\int_0^T V_{k,p}(\beta_{k,p}, t)\sum_{s=1}^{S_p}\hat{E}[\int_0^T X_{p,i}(t)\varphi_{p,s}(t)dt \,|\, Z_{p,i}]\hat{\varphi}_{p,s}(t)dt$ using numerical integration, then the subsequent layers can be calculated accordingly to get an estimate for the failure prediction or RUL label.

3. To find the optimal set of parameters for the predictive maintenance tasks, example implementations conduct a backward propagation to update parameters $(a_k, b_k)$ and $\beta$. In order to perform backward propagation, example implementations calculate the partial derivatives of the proposed sparse functional neuron $H(X_{1,i}(t),...,X_{p,i}(t),\beta)$ with respect to the parameters.

$$\frac{\delta H}{\delta a_k} = U_k(b_k + \sum_{p=1}^P \int_0^T V_{k,p}(\beta_{k,p}, t)\sum_{s=1}^{S_p}\hat{E}\left[\int_0^T X_{p,i}(t)\varphi_{p,s}(t)dt \,\middle|\, Z_{p,i}\right]\hat{\varphi}_{p,s}(t)dt)$$

$$\frac{\delta H}{\delta b_k} = U_k'(b_k + \sum_{p=1}^P \int_0^T V_{k,p}(\beta_{k,p}, t)\sum_{s=1}^{S_p}\hat{E}\left[\int_0^T X_{p,i}(t)\varphi_{p,s}(t)dt \,\middle|\, Z_{p,i}\right]\hat{\varphi}_{p,s}(t)dt)$$

$$\frac{\delta H}{\delta \beta_{k,p,q}} = U_k'(b_k + \sum_{p=1}^P \int_0^T V_{k,p}(\beta_{k,p}, t)\sum_{s=1}^{S_p}\hat{E}\left[\int_0^T X_{p,i}(t)\varphi_{p,s}(t)dt \,\middle|\, Z_{p,i}\right]\hat{\varphi}_{p,s}(t)dt)$$

$$\times \int_0^T \frac{\delta V_{k,p}(\beta_{k,p}, t)}{\delta \beta_{k,p,q}}\sum_{s=1}^{S_p}\hat{E}\left[\int_0^T X_{p,i}(t)\varphi_{p,s}(t)dt \,\middle|\, Z_{p,i}\right]\hat{\varphi}_{p,s}(t)dt$$

The first two partial derivatives can be calculated straightforwardly. For the third partial derivative, example implementations have an additional assumption regarding $V_{k,p}(\beta_{k,p}, t)$, i.e., that is the assumption that $\dfrac{\delta V_{k,p}(\beta_{k,p}, t)}{\delta \beta_{k,p,q}}$ exists within range $[0, T]$. Depending on the desired implementation, the function $V_{k,p}(\beta_{k,p}, t)$ can be specified by users, which makes the assumption achievable. For instance, examples of valid functions are linear combinations of some unknown functions. The updated parameters with learning rates $\gamma_{a_k}, \gamma_{b_k}, \gamma_{\beta_{k,p,q}}$ are

$$\widetilde{a_k} = a_k - \gamma_{a_k} \frac{\delta H}{\delta a_k}$$

$$\widetilde{b_k} = b_k - \gamma_{b_k} \frac{\delta H}{\delta b_k}$$

$$\widetilde{\beta_{k,p,q}} = \beta_{k,p,q} - \gamma_{\beta_{k,p,q}} \frac{\delta H}{\delta \beta_{k,p,q}}$$

Example implementations repeat step 2 and 3 until a certain stopping criterion (e.g., as set according to the desired implementation) is satisfied. The output involves a mapping between sparse sensor data and a failure prediction/RUL prediction label, which can be used to make predictions about the failure prediction/RUL label based on sparsely observed sensor readings within window $[0, T]$.

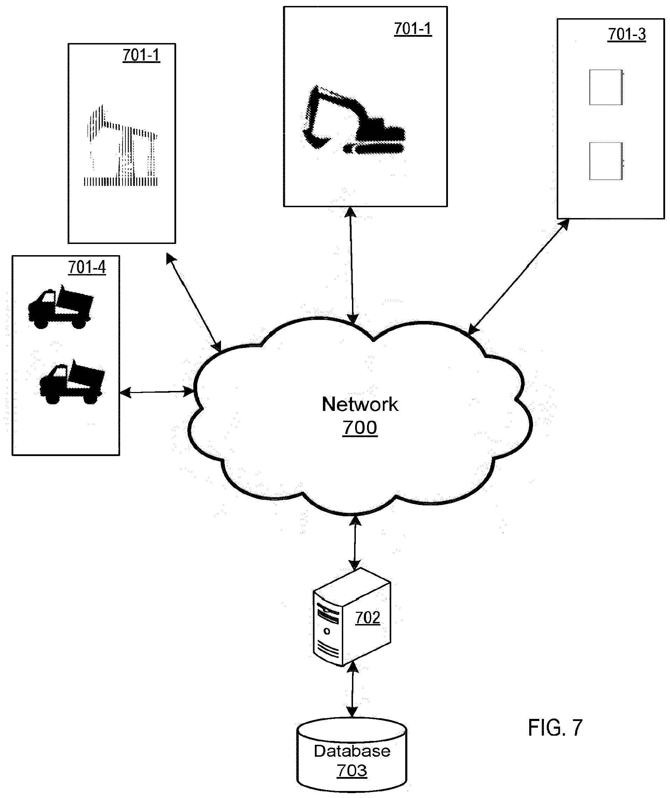

FIG. 7 illustrates a system involving a plurality of apparatuses and a maintenance planning apparatus, in accordance with an example implementation. One or more apparatuses or apparatus systems 701-1, 701-2, 701-3, and 701-4 are communicatively coupled to a network 700 which is connected to a maintenance planning apparatus 702. The maintenance planning apparatus 702 manages a database 703, which contains historical data collected from the apparatuses and apparatus systems in the network 700. In alternate example implementations, the data from the apparatuses and apparatus systems 701-1, 701-2, 701-3, and 701-4 can be stored to a central repository or central database such as proprietary databases that data from equipment or equipment systems such as enterprise resource planning systems, and the maintenance planning apparatus 702 can access or retrieve the data from the central repository or central database. Such apparatuses can include stationary apparatuses or equipment such as coolers, air conditioners, servers, as well as mobile apparatuses or equipment such as automobiles, trucks, cranes, as well as any other apparatuses that undergo periodic maintenance. Such apparatuses can involve sensors to provide sensor data to the maintenance planning apparatus 702. In example implementations, the data from some of the apparatuses and apparatus systems may only be provided sparsely due to remoteness or general lack of connectivity (e.g., sensors with limited battery power or connectivity that connect to the network once a year to transmit data, sensors that only connect sparsely to the network due to bandwidth costs, such as cellular based sensors, etc.)

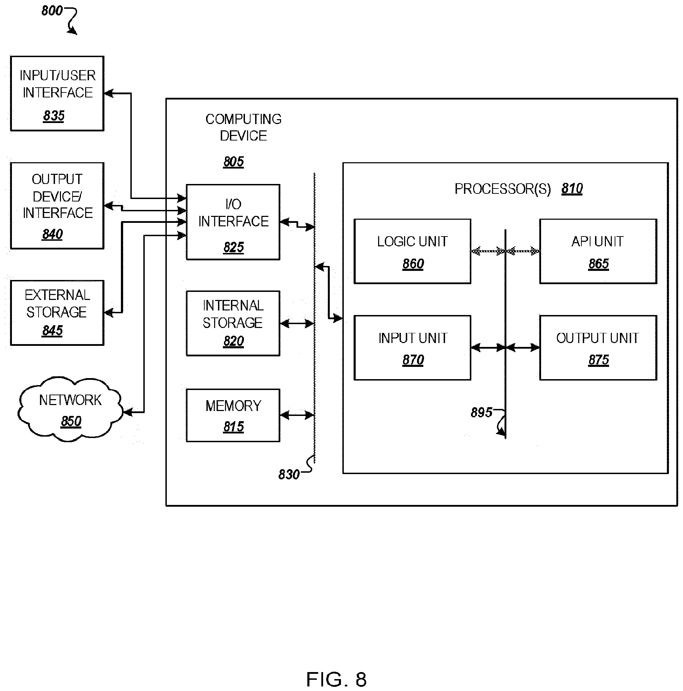

FIG. 8 illustrates an example computing environment with an example computer device suitable for use in some example implementations, such as a maintenance planning apparatus 702 as illustrated in FIG. 7. Computer device 805 in computing environment 800 can include one or more processing units, cores, or processors 810, memory 815 (e.g., RAM, ROM, and/or the like), internal storage 820 (e.g., magnetic, optical, solid state storage, and/or organic), and/or I/O interface 825, any of which can be coupled on a communication mechanism or bus 830 for communicating information or embedded in the computer device 805. I/O interface 825 is also configured to receive images from cameras or provide images to projectors or displays, depending on the desired implementation.

Computer device 805 can be communicatively coupled to input/user interface 835 and output device/interface 840. Either one or both of input/user interface 835 and output device/interface 840 can be a wired or wireless interface and can be detachable. Input/user interface 835 may include any device, component, sensor, or interface, physical or virtual, that can be used to provide input (e.g., buttons, touch-screen interface, keyboard, a pointing/cursor control, microphone, camera, braille, motion sensor, optical reader, and/or the like). Output device/interface 840 may include a display, television, monitor, printer, speaker, braille, or the like. In some example implementations, input/user interface 835 and output device/interface 840 can be embedded with or physically coupled to the computer device 805. In other example implementations, other computer devices may function as or provide the functions of input/user interface 835 and output device/interface 840 for a computer device 805.

Examples of computer device 805 may include, but are not limited to, highly mobile devices (e.g., smartphones, devices in vehicles and other machines, devices carried by humans and animals, and the like), mobile devices (e.g.,

tablets, notebooks, laptops, personal computers, portable televisions, radios, and the like), and devices not designed for mobility (e.g., desktop computers, other computers, information kiosks, televisions with one or more processors embedded therein and/or coupled thereto, radios, and the like).

Computer device 805 can be communicatively coupled (e.g., via I/O interface 825) to external storage 845 and network 850 for communicating with any number of networked components, devices, and systems, including one or more computer devices of the same or different configuration. Computer device 805 or any connected computer device can be functioning as, providing services of, or referred to as a server, client, thin server, general machine, special-purpose machine, or another label.

I/O interface 825 can include, but is not limited to, wired and/or wireless interfaces using any communication or I/O protocols or standards (e.g., Ethernet, 802.11x, Universal System Bus, WiMax, modem, a cellular network protocol, and the like) for communicating information to and/or from at least all the connected components, devices, and network in computing environment 800. Network 850 can be any network or combination of networks (e.g., the Internet, local area network, wide area network, a telephonic network, a cellular network, satellite network, and the like).

Computer device 805 can use and/or communicate using computer-usable or computer-readable media, including transitory media and non-transitory media. Transitory media include transmission media (e.g., metal cables, fiber optics), signals, carrier waves, and the like. Non-transitory media include magnetic media (e.g., disks and tapes), optical media (e.g., CD ROM, digital video disks, Blu-ray disks), solid state media (e.g., RAM, ROM, flash memory, solid-state storage), and other non-volatile storage or memory.

Computer device 805 can be used to implement techniques, methods, applications, processes, or computer-executable instructions in some example computing environments. Computer-executable instructions can be retrieved from transitory media, and stored on and retrieved from non-transitory media. The executable instructions can originate from one or more of any programming, scripting, and machine languages (e.g., C, C++, C#, Java, Visual Basic, Python, Perl, JavaScript, and others).

Processor(s) 810 can execute under any operating system (OS) (not shown), in a native or virtual environment. One or more applications can be deployed that include logic unit 860, application programming interface (API) unit 865, input unit 870, output unit 875, and inter-unit communication mechanism 895 for the different units to communicate with each other, with the OS, and with other applications (not shown). The described units and elements can be varied in design, function, configuration, or implementation and are not limited to the descriptions provided. Processor(s) 810 can be in the form of hardware processors such as central processing units (CPUs) or in a combination of hardware and software units.

In some example implementations, when information or an execution instruction is received by API unit 865, it may be communicated to one or more other units (e.g., logic unit 860, input unit 870, output unit 875). In some instances, logic unit 860 may be configured to control the information flow among the units and direct the services provided by API unit 865, input unit 870, output unit 875, in some example implementations described above. For example, the flow of one or more processes or implementations may be controlled by logic unit 860 alone or in conjunction with API unit 865. The input unit 870 may be configured to obtain input for the calculations described in the example implementations, and the output unit 875 may be configured to provide output based on the calculations described in example implementations.

Processor(s) 810 can be configured to correct for sparse data sampling in a system involving a plurality of sensors providing sensor data associated with a plurality of equipment of the system and a database with historical data of the plurality of sensors as illustrated in FIG. 7. To correct for sparse data sampling, processor(s) 810 can be configured to assemble sparse measurements of the sensor data across the plurality of equipment of the system with sparse measurements from the historical data of the plurality of sensors in the database as illustrated in FIG. 5. In example implementations and as described herein, each sensor data series recorded is a time series. For a given time series, there may be different time steps (t1, t2...tn).

For each time series of the assembled sparse measurements of the sensor data, processor(s) 810 can infer statistics regarding a relationship between different time steps from the sparse measurements of the sensor data as illustrated in FIG. 5. For example, processor(s) 810 can infer the statistics regarding the relationship between the different time steps from the sparse measurements by determining mean and a covariance function estimation for the each time step of the sparse measurements of sensor data as disclosed at 510 in FIG. 5.

Processor(s) 810 can be configured to determine an overall function for each sensor type of the plurality of sensors across all equipment from the inferred statistics as illustrated in FIGS. 5 and 6. Depending on the desired implementation, processor(s) 810 can determine the overall function for the each sensor type as a sequential model determined for a given time window or a series of non-overlapping time windows of the sensor data as illustrated in FIG. 2, 4, 5 and elements 530 and 550. Processor(s) 810 can also be configured to determine the overall function by conducting eigen decomposition on the covariance function to determine the eigenfunctions as the overall function for each sensor type of the plurality of sensors across all equipment as described in 511 and 520 of FIG. 5.

Processor(s) 810 can also be configured to derive a specific instance for each of the plurality of equipment that model the sensor data for the each of the plurality of equipment, from the overall function as illustrated in FIG. 5.

Processor(s) 810 can also be configured to incorporate the specific instances to learn a predictive maintenance model for each equipment, the predictive maintenance model configured to generate predictions for predictive maintenance as illustrated in FIG. 5, 520, 530, 540, 550, 560, and FIG. 6. For example, deriving a specific instance for each of the plurality of equipment that model the sensor data for the each of the plurality of equipment, from the overall function can involve projecting sensor curves into an eigenspace defined by the eigenfunctions for the plurality of sensors; estimating a slope parameter for the projected sensor curves; and estimating an individual sensor curve for each of the plurality of sensors according to the slope parameter as illustrated in FIG. 6, elements 610, 611, 612, and 620. In example implementations, the incorporating the specific instances to learn the predictive maintenance model can be conducted by embedding the specific instances into a functional neural network as illustrated in FIG. 4 and 613 of FIG. 6. Depending on the desired implementation, the predictions for predictive maintenance can involve a failure prediction label indicative of one or more of failure, non-failure, or remaining useful life as illustrated in FIG. 6, element 630. In an example implementation, the prediction can indicate the remaining useful life (e.g., in terms of time left until maintenance required) and indicate the failure status if applicable (e.g., equipment is not going to fail, equipment is going to fail or has failed).

The proposed predictive maintenance system for equipment with sparse sensor data provides a systematical way of learning a mathematical mapping between sparse sensor data and a numerical maintenance-related label such as failure prediction or RUL label. In particular, example implementations can be applied to a wide range of industries in which data storage and communication incur large costs.

Further, through the example implementations described herein, it is possible to parse sparse data such as systems in which the measurements of interest come from mobile measurement devices which cannot be achieved at all the locations or across the lifespan of the devices, or in systems with sensor measurements having large amounts of missing values. Through the example implementations as described herein, involving inferring statistics regarding a relationship between different time steps from the sparse measurements of the sensor data; determining an overall function for each sensor type of the plurality of sensors across all equipment from the inferred statistics; deriving a specific instance for each of the plurality of equipment that model the sensor data for the each of the plurality of equipment, from the overall function; and incorporating the specific instances to learn a predictive maintenance model for each equipment as illustrated in FIGS. 4-6, it is possible to generate a more accurate prediction system for sensors with sparse data and more accurately train functional neural networks to model sensors providing sparse data in comparison to the related art approaches.

Some portions of the detailed description are presented in terms of algorithms and symbolic representations of operations within a computer. These algorithmic descriptions and symbolic representations are the means used by those skilled in the data processing arts to convey the essence of their innovations to others skilled in the art. An algorithm is a series of defined steps leading to a desired end state or result. In example implementations, the steps carried out require physical manipulations of tangible quantities for achieving a tangible result.

Unless specifically stated otherwise, as apparent from the discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

Example implementations may also relate to an apparatus for performing the operations herein. This apparatus may be specially constructed for the required purposes, or it may include one or more general-purpose computers selectively activated or reconfigured by one or more computer programs. Such computer programs may be stored in a computer readable medium, such as a computer-readable storage medium or a computer-readable signal medium. A computer-readable storage medium may involve tangible mediums such as, but not limited to optical disks, magnetic disks, read-only memories, random access memories, solid state devices and drives, or any other types of tangible or non-transitory media suitable for storing electronic information. A computer readable signal medium may include mediums such as carrier waves. The algorithms and displays presented herein are not inherently related to any particular computer or other apparatus. Computer programs can involve pure software implementations that involve instructions that perform the operations of the desired implementation.

Various general-purpose systems may be used with programs and modules in accordance with the examples herein, or it may prove convenient to construct a more specialized apparatus to perform desired method steps. In addition, the example implementations are not described with reference to any particular programming language. It will be appreciated that a variety of programming languages may be used to implement the teachings of the example implementations as described herein. The instructions of the programming language(s) may be executed by one or more processing devices, e.g., central processing units (CPUs), processors, or controllers.

As is known in the art, the operations described above can be performed by hardware, software, or some combination of software and hardware. Various aspects of the example implementations may be implemented using circuits and logic devices (hardware), while other aspects may be implemented using instructions stored on a machine-readable medium (software), which if executed by a processor, would cause the processor to perform a method to carry out implementations of the present application. Further, some example implementations of the present application may be performed solely in hardware, whereas other example implementations may be performed solely in software. Moreover, the various functions described can be performed in a single unit, or can be spread across a number of components in any number of ways. When performed by software, the methods may be executed by a processor, such as a general purpose computer, based on instructions stored on a computer-readable medium. If desired, the instructions can be stored on the medium in a compressed and/or encrypted format.

Moreover, other implementations of the present application will be apparent to those skilled in the art from consideration of the specification and practice of the teachings of the present application. Various aspects and/or components of the described example implementations may be used singly or in any combination. It is intended that the specification and example implementations be considered as examples only, with the true scope and spirit of the present application being indicated by the following claims.

**Claims**

1.  A method for correcting for sparse data sampling in a system comprising a plurality of sensors providing sensor data associated with a plurality of equipment of the system, a database with historical data of the plurality of sensors, the method comprising:

    assembling sparse measurements of the sensor data across the plurality of equipment of the system with sparse measurements from the historical data of the plurality of sensors in the database;
    for each time series of the assembled sparse measurements of the sensor data, inferring statistics regarding a relationship between different time steps from the sparse measurements of the sensor data;
    determining an overall function for each sensor type of the plurality of sensors across all equipment from the inferred statistics;
    deriving a specific instance for each of the plurality of equipment that model the sensor data for the each of the plurality of equipment, from the overall function; and
    incorporating the specific instances to learn a predictive maintenance model for each equipment, the predictive maintenance model configured to generate predictions for predictive maintenance.

2.  The method of claim 1, wherein the incorporating the specific instances to learn the predictive maintenance model is conducted by embedding the specific instances into a functional neural network.

3.  The method of claim 1, wherein the predictions for predictive maintenance comprises a failure prediction label indicative of one or more of failure, non-failure, or remaining useful life.

4.  The method of claim 1, wherein the overall function for the each sensor type is a sequential model determined for a given time window or a series of non-overlapping time windows of the sensor data.

5.  The method of claim 1, wherein the inferring the statistics regarding the relationship between the different time steps from the sparse measurements comprises determining mean and a covariance function estimation for the each time step of the sparse measurements of sensor data and wherein determining the overall function comprises conducting eigen decomposition on the covariance function to determining the eigenfunctions as the overall function for each sensor type of the plurality of sensors across all equipment.

6.  The method of claim 5, wherein deriving a specific instance for each of the plurality of equipment that model the sensor data for the each of the plurality of equipment, from the overall function comprises:

    projecting sensor curves into an eigenspace defined by the eigenfunctions for the plurality of sensors;
    estimating a slope parameter for the projected sensor curves; and
    estimating an individual sensor curve for each of the plurality of sensors according to the slope parameter.

7.  A non-transitory computer readable medium, storing instructions for correcting for sparse data sampling in a system comprising a plurality of sensors providing sensor data associated with a plurality of equipment of the system, a database with historical data of the plurality of sensors, the method comprising:

    assembling sparse measurements of the sensor data across the plurality of equipment of the system with sparse measurements from the historical data of the plurality of sensors in the database;

for each time step of the assembled sparse measurements of the sensor data, inferring statistics regarding a relationship between different time steps from the sparse measurements of the sensor data;

determining an overall function for each sensor type of the plurality of sensors across all equipment from the inferred statistics;

deriving a specific instance for each of the plurality of equipment that model the sensor data for the each of the plurality of equipment, from the overall function; and

incorporating the specific instances to learn a predictive maintenance model for each equipment, the predictive maintenance model configured to generate predictions for predictive maintenance.

8. The non-transitory computer readable medium of claim 7, wherein the incorporating the specific instances to learn the predictive maintenance model is conducted by embedding the specific instances into a functional neural network.

9. The non-transitory computer readable medium of claim 7, wherein the predictions for predictive maintenance comprises a failure prediction label indicative of one or more of failure, non-failure, or remaining useful life.

10. The non-transitory computer readable medium of claim 7, wherein the overall function for the each sensor type is a sequential model determined for a given time window or a series of non-overlapping time windows of the sensor data.

11. The non-transitory computer readable medium of claim 7, wherein the inferring the statistics regarding the relationship between the different time steps from the sparse measurements comprises determining mean and a covariance function estimation for the each time step of the sparse measurements of sensor data and wherein determining the overall function comprises conducting eigen decomposition on the covariance function to determining the eigenfunctions as the overall function for each sensor type of the plurality of sensors across all equipment.

12. The non-transitory computer readable medium of claim 11, wherein deriving a specific instance for each of the plurality of equipment that model the sensor data for the each of the plurality of equipment, from the overall function comprises:

projecting sensor curves into an eigenspace defined by the eigenfunctions for the plurality of sensors;

estimating a slope parameter for the projected sensor curves; and

estimating an individual sensor curve for each of the plurality of sensors according to the slope parameter.

13. A system comprising:

a plurality of sensors providing sensor data associated with a plurality of equipment of the system;

a database with historical data of the plurality of sensors;

and an apparatus configured to receive the sensor data, the apparatus comprising:

a processor, configured to:

assemble sparse measurements of the sensor data across the plurality of equipment of the system with sparse measurements from the historical data of the plurality of sensors in the database;

for each time step of the assembled sparse measurements of the sensor data, infer statistics regarding a relationship between different time steps from the sparse measurements of the sensor data;

determine an overall function for each sensor type of the plurality of sensors across all equipment from the inferred statistics;

derive a specific instance for each of the plurality of equipment that model the sensor data for the each of the plurality of equipment, from the overall function; and

incorporate the specific instances to learn a predictive maintenance model for each equipment, the predictive maintenance model configured to generate predictions for predictive maintenance.

FIG. 1

FIG. 2

FIG. 3

FIG. 4

Input data:
sparse sensor
data and
failure
prediction or
RUL label 500

Mean and covariance function
estimation for each sensor data 510

Eigen decomposition using
estimated covariance function 511

Functional
eigen-
decomposition
for sparse
sensor data 520

Project unknown sensor curves
into estimated eigen space 512

Estimate slope parameter with
best linear unbiased predictor 513

Estimate the individual sensor
curves 514

Achieve best
predictor for
the individual
sensor curves
based on
sparse
functional
eigen-
decomposition
results. 530

Outputs: a
mathematical
mapping
between sparse
sensor data and
the failure
prediction/RUL
label. 560

Specify components in sparse
functional deep networks 540

Learn sparse functional deep
networks through gradient
descents 550

FIG. 5

Inputs: new sparse sensor data 600

Project unknown sensor curves into estimated eigen space shared with the training data 610

Estimate the unknown equipment-dependent slope parameters using the estimated eigen components in training 611

Estimate the individual sensor curves 612

Feed the predicted sensor curves to learned sparse functional deep networks to make prediction. 613

Achieve best predictor for the individual sensor curves using sparse functional eigen decomposition results in the training phase 620

Outputs: for any sensor data from new devices, the predicted failure prediction/RUL label 630

FIG. 6

EP 3 745 313 A1

FIG. 7

800

INPUT/USER
INTERFACE
*835*

COMPUTING
DEVICE

*805*

OUTPUT
DEVICE/
INTERFACE
*840*

I/O
INTERFACE

*825*

EXTERNAL
STORAGE
*845*

INTERNAL
STORAGE
*820*

NETWORK
*850*

MEMORY
*815*

PROCESSOR(S) *810*

LOGIC UNIT
*860*

API UNIT
*865*

INPUT UNIT
*870*

OUTPUT UNIT
*875*

*895*

*830*

FIG. 8

20

Europäisches
Patentamt

European
Patent Office

Office européen
des brevets

**EUROPEAN SEARCH REPORT**

Application Number

EP 20 16 1292

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Qiyao Wang ET AL: "Remaining Useful Life Estimation Using Functional Data Analysis", , 12 April 2019 (2019-04-12), XP055732517, Retrieved from the Internet: URL:https://arxiv.org/pdf/1904.06442.pdf * Abstract; Sections I, II.A, II.B, III.A; Equations 1-10; figure 2 * ----- | 1-13 | INV. G06N3/04 G06N3/08 G06N20/00 |
| A | FANG YAO ET AL: "Functional Data Analysis for Sparse Longitudinal Data", JOURNAL OF THE AMERICAN STATISTICAL ASSOCIATION., vol. 100, no. 470, 1 June 2005 (2005-06-01), pages 577-590, XP055732918, US ISSN: 0162-1459, DOI: 10.1198/016214504000001745 * Abstract and Section II * ----- | 1-13 | |
| A | Qiyao Wang: "TWO-SAMPLE INFERENCE AND CHANGE POINT DETECTION FOR SPARSE FUNCTIONAL DATA", , 29 September 2017 (2017-09-29), XP055732540, Retrieved from the Internet: URL:http://d-scholarship.pitt.edu/33131/1/ PhD%20Thesis%20of%20Qiyao%20Wang_Two-sampl e%20inference%20and%20change%20point%20det ection%20for%20sparse%20functional%20data. pdf [retrieved on 2020-09-21] * abstract * ----- -/-- | 1-13 | TECHNICAL FIELDS SEARCHED (IPC) G06N |

The present search report has been drawn up for all claims

| Place of search | Date of completion of the search | Examiner |
|---|---|---|
| The Hague | 22 September 2020 | Szymanski, Francois |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 20 16 1292

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JEFFREY S. MORRIS: "Functional Regression", ANNUAL REVIEW OF STATISTICS AND ITS APPLICATION, vol. 2, no. 1, 10 April 2015 (2015-04-10), pages 321-359, XP055732915, ISSN: 2326-8298, DOI: 10.1146/annurev-statistics-010814-020413 * abstract * ----- | 1-13 | |

TECHNICAL FIELDS
SEARCHED      (IPC)

The present search report has been drawn up for all claims

| Place of search | Date of completion of the search | Examiner |
|---|---|---|
| The Hague | 22 September 2020 | Szymanski, Francois |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)